# EUROPÄISCHE PATENTSCHRIFT

(11) **EP 1 600 685 B1**
(45) Veröffentlichungstag und Bekanntmachung des Hinweises auf die Patenterteilung: **01.02.2012**
(21) Anmeldenummer: 05076234.3
(22) Anmeldetag: 25.05.2005
(51) Int. Cl.: F16T 1/22, F24H 8/00

(54) **Kombination aus einem Heizapparat und einem Verschluss für eine Kondensatabfuhr**
Combination of a heating apparatus and a closure for a condensate removal device
Combinaison d'un appareil de chauffage et d'une fermeture pour un dispositif d'évacuation des condensats

(30) Priorität: 25.05.2004 NL 1026260
(43) Veröffentlichungstag der Anmeldung: 30.11.2005
(73) Patentinhaber: NEFIT BUDERUS B.V., 7418 BG Deventer (NL)
(72) Erfinder: PROSS, Arno Herman, 7591 LE Denekamp (NL); PETERS, Richel Hendricus Bernardus, 7423 XL Deventer (NL); WILLEMSEN, René, 7424 GC Deventer (NL)
(74) Vertreter: Riemens, Roelof Harm

(56) Entgegenhaltungen:
- EP-A- 0 470 053
- EP-A- 0 793 053
- DE-C- 199 875
- GB-A- 1 472 221

## Beschreibung

Die Erfindung betrifft eine Kombination aus einem Heizapparat und einem Verschluß für eine Kondensatabfuhr gemäß dem Oberbegriff des Anspruchs 1. Eine solche Kombination ist aus der GB 1 472 221 bekannt.

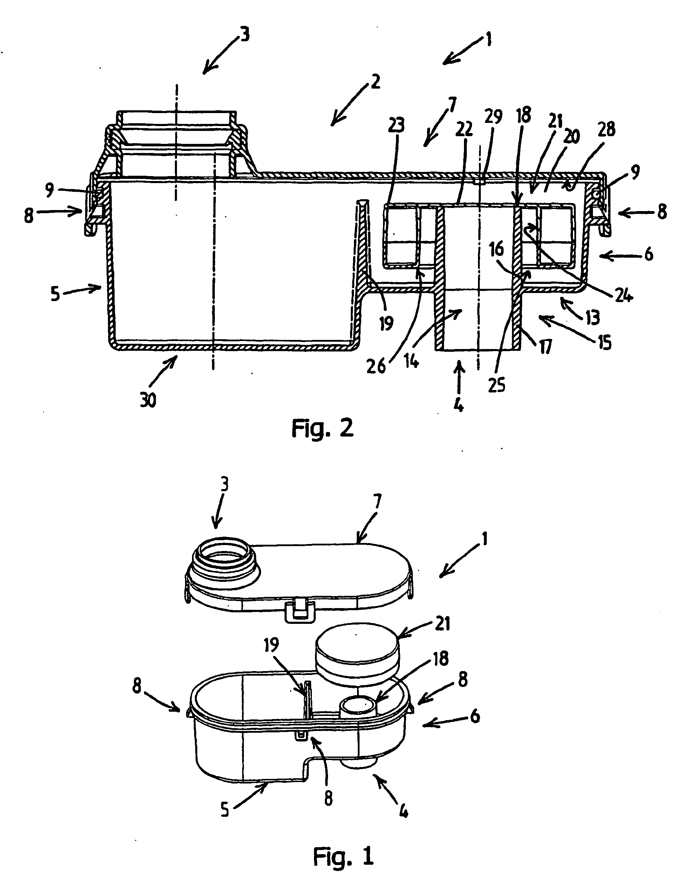

Eine weitere Kombination aus einem Heizapparat und einem Verschluß für eine Kondensatabfuhr ist aus der EP-A1-0.470.053 bekannt und dient dort dazu, einerseits Kondensat von einem Heizapparat abführen zu können und andererseits zu verhindern, daß Verbrennungsgase über die Flüssigkeitsabfuhr in den Kanal kommen oder daß umgekehrt Kanalgase in die Verbrennungsvorrichtung gelangen. Die Figur 2 dieser Veröffentlichung zeigt einen Heizapparat mit einem Brenner, einem Wärmetauscher und einer Verbrennungsgaskammer. Der Boden der Verbrennungsgaskammer ist mit einer Kondensatauffangbecken versehen, das über eine Leitung mit einem Verschluß in Verbindung steht. Der Verschluß wird im Querschnitt in der Figur 6 gezeigt und umfaßt ein Gehäuse, in dem eine Flüssigkeitskammer vorgesehen ist. In der Flüssigkeitskammer befinden sich ein Ventil und ein komplementärer Ventilsitz,_der durch den Rand eines vorstehenden Überlaufrohres gebildet ist. Das Ventil ist mit einem Auftriebskörper versehen. Der Auftriebskörper weist an seiner Oberseite eine Führung auf, die in einer Aussparung des Gehäuses verschiebbar aufgenommen ist. Die vorstehende Leitung kann an ihrer Unterseite an eine Abführleitung angeschlossen werden. Die Abführleitung führt über einen Siffon zu einem Kanalrohr.

Im Betrieb bildet der Heizapparat Kondensat, welches sich über das Kondensatauffangbecken in der Flüssigkeitskammer sammelt. Sobald sich genügend Kondensat in der Flüssigkeitskammer gesammelt hat, wirkt die Auftriebskraft auf den Auftriebskörper des Ventils gleich auf das Gewicht und es wird aufgetrieben. Hierdurch kommt das Ventil von dem Ventilsitz frei und Flüssigkeit kann durch das Überlaufrohr wegströmen.

Über den bekannten Verschluß kann ein Druckunterschied zustande kommen, beispielsweise aufgrund eines Überdrucks in dem Heizapparat. Ein derartiger Überdruck entsteht, indem die Verbrennungsgasabfuhr des Heizapparates ganz oder teilweise verstopft wird. In einem solchen Fall wird das Ventil auf den Sitz gedrückt und läßt im Prinzip kein Gas durch.

Nachteilig bei der bekannten Kombination eines Heizapparates und eines Verschlusses ist, daß das Verschließen bei dem Auftreten von Überdruck nicht zuverlässig ist. So kann der Verschluß trocken werden, beispielsweise indem einige Zeit lang kein Kondensat zugeführt wird und das Kondensat in dem Verschluß selbst durch Verdampfung verschwindet. Gleichzeitig kann ein kleiner Überdruck der Rauchgase zu dem Ausblasen des Verschlusses führen. Um die Zuverlässigkeit des bekannten Verschlusses zu vergrößern, ist dieser stromabwärts mit einem Siffon versehen.

Das Ziel der betreffenden Erfindung ist es, eine Kombination aus einem Heizapparat und einem Verschluß bereitzustellen, bei dem dieser Nachteil zumindest teilweise abgefangen werden, oder eine brauchbare Alternative bereitzustellen.

Insbesondere hat die Erfindung als Ziel, eine zuverlässigere Kombination aus einem Heizapparat und einem Verschluß bereitzustellen.

Gemäß der Erfindung wird dieses Ziel durch eine Kombination aus einem Heizapparat und einem Verschluß nach dem Anspruch 1 erreicht. Die Kombination aus einem Heizapparat und einem Verschluß umfaßt eine Flüssigkeitskammer, ein Ventil und einen komplementären Ventilsitz. Die Flüssigkeitskammer umfaßt einen Boden, der mit einem Ablauf versehen ist. Das Ventil ist mit einem Auftriebskörper versehen. Der Ablauf umfaßt ein Überlaufrohr, das sich zumindest vom Boden nach oben erstreckt und an seiner oben gelegenen Öffnung mit dem Ventilsitz versehen ist. Das Ventil umfaßt einen umgekehrt becherförmigen Auftriebskörper, von dem sich der Rand im Betrieb um das Überlaufrohr herum erstreckt. Anders gesagt erstreckt sich der Rand des becherförmigen Auftriebskörpers sowohl in geöffneter Position, in geschlossener Position als auch in einer Zwischenposition des Ventils um das Überlaufrohr herum.

Der Rand des umgekehrt becherförmigen Auftriebskörpers und das Überlaufrohr bilden zusammen einen Wasserverschluß aus. Hierdurch ist auf eine kompakte Weise die Funktion eines auftreibbaren Ventils und eines Wasserverschlusses miteinander vereint. Hierdurch behält der Verschluß seine verschließende Wirkung für Gase selbst wenn das Ventil nicht vollständig abdichtend auf dem Ventilsitz befindet, und die Zuverlässigkeit ist vergrößert.

Überdies bleibt das Ventil dank des becherförmigen Auftriebskörpers oberhalb der Öffnung des Überlaufrohres ohne daß hierfür zusätzliche Führungen und/oder Gelenke, wie beispielsweise die Führungen gemäß dem Stand der Technik, notwendig sind.

Verschmutzungen, die sich in der Flüssigkeit in der Flüssigkeitskammer befinden, sinken auf den Boden dieser Kammer ab. Dank des Überlaufrohres befindet sich der Ventilsitz in einigem Abstand oberhalb dieses Bodens, wodurch der Schmutz weniger leicht zwischen den Ventilsitz und das Ventil gelangen kann. Hierdurch tritt weniger schnell eine Leckage des Ventils auf. Weiter umfaßt der Verschluß ein Niederschlagsbecken, das mit der Flüssigkeitskammer in Gas- und Flüssigkeitsverbindung steht. Ein solches Niederschlagsbecken gibt Verschmutzungen in der Flüssigkeit die Möglichkeit, sich abzulagern, bevor die Flüssigkeit in die Flüssigkeitskammer eintritt. Dies verkleinert weiter die Chance, daß der Schmutz zwischen das Ventil und den Ventilsitz gelangt.

Insbesondere erstreckt sich das Überlaufrohr über mindestens 0,5 Zentimeter nach oben. Eine solche Höhe ist häufig ausreichend, um zu verhindern, daß Schmutz in das Ventil und den Ventilsitz gelangt.

In einem Ausführungsbeispiel erstreckt sich der Auftriebskörper zumindest teilweise um das Überlaufrohr herum. Dies ergibt eine wirksame Raumausnutzung und kann zu einer kompakten Ausführung des Verschlusses führen.

Insbesondere erstreckt sich der Auftriebskörper im wesentlichen unterhalb eines verschließenden Teils des Ventils und bildet zumindest einen Teil des becherförmigen Auftriebskörpers. Dies führt zu einer besonders kompakten Ausführungsform, wobei der Auftriebskörper zumindest teilweise die Wasserabschließfunktion erfüllt.

Insbesondere erstreckt sich der Boden des Niederschlagsbeckens im wesentlichen auf einem niedrigeren Niveau als der Boden der Flüssigkeitskammer. Dies verkleinert die Chance, daß sich die verschmutzte Flüssigkeit aus der Niederschlagskammer in die Flüssigkeitskammer verschiebt, wodurch bei einer geringen Menge Flüssigkeit diese Flüssigkeit mit der darin eventuell vorhandenen Verschmutzung in dem Niederschlagsbecken verbleibt.

In einer Variante sind die Niederschlagskammer und die Flüssigkeitskammer mittels einer Niederschlagsschotte voneinander getrennt. Diese Schotte begrenzt an ihrer Oberseite eine Durchströmöffnung zwischen dem Niederschlagsbecken und der Flüssigkeitskammer. Die Niederschlagsschotte verhindert das Verschieben eventuell vorhandener Verschmutzung aus dem Niederschlagsbecken in die Flüssigkeitskammer.

In einer Ausführungsform umfaßt die Flüssigkeitskammer eine Decke, und es ist mindestens ein Abstandhalter zwischen dem Ventil und der Decke an mindestens einem der beiden Teile vorgesehen. Ein solcher Abstandhalter verhindert, daß das Ventil an der Decke festklebt, wodurch es seine verschließende Wirkung verlieren würde.

Weitere Ausführungsformen der Erfindung sind in den Unteransprüchen festgelegt.

Eine Ausführungsform der Erfindung wird hiernach anhand der beigefügten Zeichnung erläutert, in der:
Fig.1 eine auseinandergenommene perspektivische Darstellung eines Verschlusses gemäß der Erfindung zeigt;
Fig. 2 eine Schnittdarstellung des Verschlusses gemäß der Fig. 1 zeigt;
Fig. 3 einen Teil eines Heizapparates zeigt, der mit einem erfindungsgemäßen Verschluß versehen ist.

In den Figuren 1 und 2 wird ein erfindungsgemäßer Verschluß in seiner Gesamtheit mit der Bezugsziffer 1 bezeichnet. Ein geschlossenes Gehäuse 2 ist mit einem Zulauf 3 und einem Ablauf 4 versehen. Das Gehäuse 2 umfaßt ein Niederschlagsbecken 5 und ein Schwimmerbecken 6 sowie einen Deckel 7. Das Niederschlagsbecken 5 und das Schwimmerbecken 6 sind aus einem Teil ausgebildet. Der Deckel 7 ist mittels einer Rastverbindung 8 und einer Dichtung 9 gasdicht mit beiden Becken verbunden.

Das Schwimmerbecken 6 hat einen Boden 13. Der Ablauf 4 umfaßt eine Ablauföffnung 14 in diesem Boden 13. In der Ablauföffnung 14 ist ein Rohr 15 vorgesehen, das sich im wesentlichen senkrecht zu dem Boden auf beiden Seiten von diesem erstreckt. Das Rohr 15 ist aus einem Teil mit dem Schwimmerbecken 6 ausgebildet. Der Teil des Rohres 15, der sich oberhalb des Bodens 13 befindet, dient als Überlaufrohr 16. Der obere Rand des Überlaufrohres 16 bildet einen Ventilsitz 18. Der Teil des Rohres 15, der sich unterhalb des Bodens 13 befindet, dient als Ablaufrohr 17.

Zwischen dem Niederschlagsbecken 5 und dem Schwimmerbecken 6 erstreckt sich eine Niederschlagsschotte 19. Zwischen dem oberen Rand der Niederschlagsschotte 19 und der Unterseite des Deckels 7 ist ein Durchströmraum vorhanden, der eine offene Flüssigkeitsverbindung zwischen dem Niederschlagsbecken 5 und dem Schwimmerbecken 6 schafft.

Das Schwimmerbecken 6, die Niederschlagsschotte 19 und der Deckel 7 begrenzen eine Flüssigkeitskammer 20. In der Flüssigkeitskammer 20 ist ein Ventil 21 bewegbar aufgenommen. Das Ventil 21 umfaßt eine Scheibe 22 und einen kreisförmigen Auftriebskörper oder Schwimmer 23, der sich unter der Scheibe 22 befindet und um das Überlaufrohr 16 herum erstreckt. In geschlossenem Zustand ruht die Scheibe 22 des Ventils 21 auf dem Ventilsitz 18. Der Teil der Scheibe 22, der auf dem Ventilsitz 18 ruht, kann als der verschließende Teil des Ventils 16 betrachtet werden. Der kreisförmige Auftriebskörper 23 umfaßt eine geschlossene Innenwand 24, in dieser Ausführungsform eine zylindrische Innenwand 24. Die Scheibe 22 und die zylindrische Innenwand 24 bilden zusammen einen umgekehrt becherförmigen Auftriebskörper 25. Die Begrenzung der Innenwand 24, die von der Scheibe 22 abgewandt ist, bildet einen Rand 26 des becherförmigen Auftriebskörpers 25.

Der Deckel 7 bildet in der Höhe der Flüssigkeitskammer 20 an seiner Unterseite eine Decke 28 für die Flüssigkeitskammer 20. An der Decke 28 sind drei Noppen 29 vorgesehen, von denen in der Figur 2 eine sichtbar ist, die als Abstandhalter dienen und sich in Richtung des Überlaufrohres 16, das soll heißen nach unten, erstrecken. Diese Noppen sollen verhindern, daß das Ventil 21 an der Decke 28 festkleben bleibt. Das Niederschlagsbecken 5 umfaßt einen Boden 30, der sich auf einem niedrigeren Niveau erstreckt als der Boden 13 des Schwimmerbeckens 6.

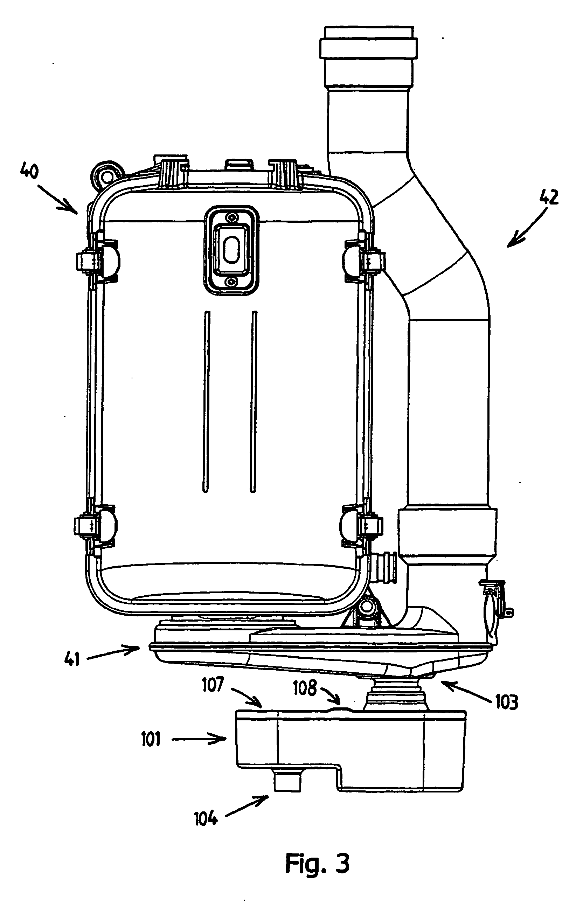

Die Figur 3 zeigt (einen Teil von) einen Heizapparat 40, beispielsweise einen HR C. V.- Kessel, an dem ein erfindungsgemäßer Verschluß 101 befestigt ist. An der Oberseite des Heizapparates befindet sich ein Zulauf, an den eine Lüftungseinheit für ein Luft/Brennstoff-Gemisch angeschlossen werden kann. In dem gezeigten Teil des Heizapparates 40 befinden sich (nicht dargestellt) ein Brenner und ein Wärmetauscher, durch welche die Verbrennungsgase hindurch geleitet werden. Die Verbrennungsgase werden durch ein Kondenswasserauffangbecken 41 und ein Verbrennungsgasabführrohr 42 weggeleitet. Unter dem Kondenswasserauffangbecken 41 ist der Verschluß 101 mit seinem Zulauf 103 luftdicht angeschlossen. An dem Ablauf 104 kann ein weiterer nicht gezeigter Schlauch, eine Röhre oder ein Rohr angeschlossen werden, der zum Kanal führt. Der Verschluß ist vergleichbar mit dem, der in Verbindung mit den Fig. 1 und 2 besprochen wurde, mit der Maßgabe, daß der Deckel 107 nicht über eine Rastverbindung mit dem Rest des Gehäuses verbunden ist, sondern mit ihm verklebt oder auf andere Weise verbunden ist oder aus einem Teil mit ihm ausgebildet ist. Ferner ist der Deckel mit einem vorstehenden Teil 108 an der Stelle der (nicht gezeigten) Niederschlagsschotte versehen.

Im Gebrauch wird eine Flüssigkeit, beispielsweise Kondenswasser, aus dem Heizapparat 40 durch den Zulauf 3 des Verschlusses 1 eintreten und sich in dem Niederschlagsbecken 5 sammeln. In dem Fall, daß ungenügend Kondenswasser in dem Schwimmerbecken 6 vorhanden ist, ruht das Ventil 21 abschließend auf dem Ventilsitz 18. Hierdurch können Verbrennungsgase, die ebenfalls über den Zulauf 3 des Verschlusses 1 eintreten können, nicht über den Ablauf 4 in den (nicht dargestellten) Kanal geführt werden. Anders herum können Kanalgase nicht über den Ablauf 4 in die Heizeinrichtung 40 eintreten. Bei weiterem Steigen des Kondenswasserniveaus in dem Niederschlagsbecken 5 wird das Kondenswasser über den oberen Rand der Niederschlagsschotte 19 in das Schwimmerbecken 6 einströmen.

Sobald auch das Schwimmerbecken 6 beginnt voll zu stehen, wird das Ventil 21 in Folge der Auftriebskraft des Kondenswassers auf den Auftriebskörper 23 schwimmen. In diesem Moment kommt das Ventil 21 von dem Ventilsitz 18 frei. Wenn das Flüssigkeitsniveau auch noch über das Niveau des Ventilsitzes 18 gelangt, wird Kondenswasser über das Überlaufrohr 16 in das Ablaufrohr 17 ausströmen.

Während das Ventil 21 von dem Ventilsitz 18 frei ist, besteht noch Dank eines Wasserverschlusses, der sowohl an der Außenseite als auch an der Innenseite des Auftriebskörpers ausgebildet ist, weiterhin eine wirksame Absperrung gegen eine Durchfuhr von Gasen. Denn an der Außenseite befindet sich Kondenswasser zwischen dem Auftriebskörper 23 und der Wand des Schwimmerbeckens 6 und der Niederschlagsschotte 19. An der Innenseite des Auftriebskörpers 23 befindet sich Kondenswasser zwischen diesem Auftriebskörper 23 und der Außenwand des Überlaufrohres 16. Der Wasserverschluß wird in diesem Fall dadurch ausgebildet, daß sich der Rand 26 des becherförmigen Auftriebskörpers 25 im Betrieb unter dem Ventilsitz 18 befindet. Anders gesagt erstreckt sich der Rand 26 des becherförmigen Auftriebskörpers 25 im Betrieb um das Überlaufrohr 16 herum. Mit "im Betrieb" ist sowohl der geschlossene als auch der geöffnete Zustand sowie dazwischenliegende Zustände gemeint.

Durch das Ausströmen des Kondenswassers sinkt das Flüssigkeitsniveau, wodurch auch das Ventil 21 sinkt. Im normalen Betrieb wird das Ventil 21 jedoch nicht soweit sinken, daß dieses wieder auf dem Ventilsitz 18 ruht, da der Auftriebskörper 23 sich unter der Scheibe 22 erstreckt. Es befindet sich noch soviel Kondenswasser in dem Schwimmerbecken 6, daß der vorher beschriebene Wasserverschluß bestehen bleibt. Falls eine größere Zeit kein Kondenswasser zugeführt wird, kann das verbleibende Kondenswasser in dem Schwimmerbecken durch Verdampfen weiter verschwinden. Hierdurch kann das Ventil 21 soweit sinken, das letzteres abschließend auf dem Ventilsitz 18 zur Ruhe kommt. So bleibt ein wirksames Verschließen des Verschlusses bestehen.

In dem Kondenswasser können Schmutzteilchen vorhanden sein, beispielsweise Aluminiumoxidteilchen, die aus dem Verbrennungsgasabfuhrrohr 42 oder dem Wärmetauscher des Heizapparates 40 stammen. Derartige Schmutzteilchen werden sich im Allgemeinen auf dem Boden 30 des Niederschlagsbeckens 5 ablagern. Verschmutzungsteilchen, die eventuell über den oberen Rand der Niederschlagsschotte 19 in das Schwimmerbecken 6 gelangen, werden im Allgemeinen auf den Boden des Schwimmerbeckens 6 sinken und sich hier ablagern. Soweit derartige Teilchen doch noch nach oben zwischen den Auftriebskörper 23 und das Überlaufrohr 16 und zwischen die Scheibe 22 und den Ventilsitz 18 gelangen sollten, sorgt der vorhandene Wasserverschluß dafür, daß keine Gase in eine der beiden Richtungen durchgeführt werden können.

Dadurch, daß sich der Auftriebskörper 23 um das Überlaufrohr 16 herum erstreckt und dadurch, daß der freie Raum zwischen dem Ventilsitz 18 und der Decke 28 kleiner ist als die Höhe des Auftriebskörpers 23, wird das Ventil 21 jederzeit oberhalb des Ventilsitzes 18 bleiben, ohne daß hier ergänzende Maßnahmen wie Leitungen oder Scharniere notwendig sind. Dies ist vorteilhaft, da derartige Leitungen und Scharniere im Laufe der Zeit aufgrund von Verschmutzung festgesetzt werden können.

Über den Verschluß 1 kann eine Gasdruckdifferenz entstehen, beispielsweise wenn das Verbrennungsgasabfuhrrohr 42 des Heizapparates 40 blockiert ist. Ein derartiger Druckunterschied wird über das Ventil 21 anstelle von dem Überlaufrohr entstehen und führt zu einer Kraft auf das Ventil 21 in Richtung des Ventilsitzes 18. Sobald diese Kraft zusammen mit den Gewicht des Ventils 21 größer wird als die eventuell vorhandene Auftriebskraft auf den Auftriebskörper, wird das Ventil 21 wirksam das Überlaufrohr 16 verschließen. In den meisten Fällen wird zu diesem Zeitpunkt auch Kondenswasser in dem Schwimmerbecken vorhanden sein und hier den vorher beschriebenen Wasserverschluß ausbilden. Der Wasserverschluß trägt zu einem wirksamen Verschließen bei. In erster Linie kann der Wasserverschluß einen Druckunterschied auffangen, der mit der Wassersäule übereinstimmt, die sich zwischen dem Überlaufrohr 16 und dem Auftriebskörper 23 erstreckt. An zweiter Stelle wird das Kondenswasser die Abdichtung zwischen der Scheibe 22 und dem Ventilsitz 18 hinsichtlich einer trockenen Situation verbessern.

Wenn der Heizapparat 40 in Betrieb bleibt, während der Verschluß 1 verschlossen ist, wird mehr Kondenswasser ausgebildet und dem Niederschlagsbecken 5 und dem Schwimmerbecken 6 zugeführt. Abhängig vom Verhältnis zwischen dem vorhandenen Überdruck und dem Gewicht des Ventils 21 einerseits und der Auftriebskraft auf den Auftriebskörper 23 andererseits wird dieses noch öffnen oder geschlossen bleiben. Im letzten Fall wird durch den ansteigenden Druck ein Mangel an Luft mit den verbrannten Brennstoff herbeigeführt, wodurch die Verbrennung in dem Heizapparat stoppt. Kondenswasser, das sich in diesem Moment oberhalb des Ventils 21 befindet, wird wirksam eine nach unten gerichtete Kraft auf den Teil der Scheibe 22 ausüben, der sich oberhalb des Überlaufrohres 16 befindet. Wenn diese Kraft, addiert mit dem Gewicht des Ventils 21 selbst, größer ist als die Auftriebskraft des Auftriebskörpers 23, dann wird das Ventil 21 geschlossen bleiben. Hierdurch wird der Heizapparat nicht automatisch wieder starten können, was in einem solchen Fall meistens gewünscht ist, da erst die Ursache des Anstieges des Druckes aufgehoben werden muß. Nachdem das passiert ist, kann das Ventil angehoben werden, bis genügend Kondenswasser ausgeströmt ist und dieses wieder seine Abführfunktion automatisch erfüllen kann. Für das Anheben des Ventils 21 kann beispielsweise das (nicht gezeigte) Rohr, das an dem Ablauf 4 angeschlossen ist, weggenommen werden, so daß das Ventil 21 einfach von unten nach oben gedrückt werden kann.

Wenn die Heizinstallation selbst mit einer Drucksicherung versehen ist, dann wird diese sich automatisch abschalten, wenn die Niederschlags- und Schwimmerbecken 5 und 6 des Verschlusses 1 vollständig vollaufen. Das manuelle Öffnen des Ventils 21 ist in diesem Fall nicht notwendig. In jedem Fall ist jedoch der Betrieb des Verschlusses selbst vollständig unabhängig von elektronischen Mitteln und dadurch preiswert und zuverlässig.

Neben der gezeigten Ausführungsform sind viele Varianten möglich. So kann das Kondenswasserauffangbecken in den Verschluß integriert sein, wodurch eine Vorrichtung entsteht, die direkt an einen Heizapparat, ein Rauchgasabfuhrrohr und den Kanal angeschlossen wird. Auch kann das Kondenswasserauffangbecken eventuell zusammen mit dem Verschluß in dem Gehäuse des Heizapparates eingebaut sein.

Die Flüssigkeitskammer kann eine andere Form haben als die gezeigte und kann auch relativ zu dem Ventil gesehen größer sein. Der Boden braucht nicht flach zu sein, sondern kann auch beispielsweise nach außen hin ablaufen, wodurch Schmutzteilchen vom Überlaufrohr weggleiten. Das Überlaufrohr kann auch in einem derartigen erhöhten Teil des Bodens aufgenommen sein. Das Überlaufrohr und der Boden können dann zusammen ein doppelwandiges Rohr bilden.

Der verschließende Teil des Ventils kann eine flache Scheibe sein, kann aber auch andere Formen haben. Als Scheibe kann er beispielsweise rund, oval, dreieckig, quadratisch oder mehreckig ausgebildet sein. Der verschließende Teil kann eine konische oder pyramidenförmige Form haben, der teilweise beim Verschließen in das Verschlußrohr fällt, oder ein hohler Verschluß mit innenwandig einer solchen Form sein, der gerade über den Rand des Überlaufrohres fällt.

Der becherförmige Auftriebskörper des Ventils muß nicht einteilig mit der Innenwand des Auftriebskörpers sein, sondern kann auch aus verschiedenen Wandteilen ausgebildet sein. Die Becherform wird dann aus einem Boden und einer von dem Boden vorstehenden Wand aufgebaut. Die Becherform muß nicht zylindrisch sein, sondern kann auch andere Formen haben. Im Querschnitt ist eine ovale, dreieckige, quadratische oder mehreckige form möglich. Der Querschnitt braucht nicht konstant zu sein, sondern kann auch in der Form und der Oberfläche variieren. So ist eine abfallende Form vom verschließenden Teil zum Rand hin gesehen gut möglich.

Das Überlaufrohr kann unterschiedliche Querschnittsformen haben, wie rund, oval, dreieckig, quadratisch oder mehreckig. Vorteilhafter Weise aber nicht notwendiger Weise haben der becherförmige Auftriebskörper des Ventils und das Überlaufrohr dieselbe Querschnittsform. Das Überlaufrohr kann höher oder größer als gezeigt sein, wobei eine größere Höhe zum Vorteil hat, daß Schmutz, der eventuell auf dem Boden abgelagert ist, einen größeren Abstand zu dem Ventilsitz zu überbrücken hat, und daß eine größere Menge Kondenswasser in dem Schwimmerbecken verbleibt, wodurch dieses weniger schnell durch Verdampfung trocken wird. Eine größere oder kleinere Höhe des Überströmrohres kann auch mit einer übereinstimmenden Vergrößerung oder Verkleinerung der Höhe des Auftriebskörpers einhergehen. In diesem Fall hat die Höhe auch Einfluß auf die Höhe des Wasserverschlusses und auf die maximale Auftriebskraft auf den Auftriebskörper haben. Für das Ablagern des Schmutzes wird vorteilhaft ungefähr 0,5 cm Rohrhöhe eingehalten. Darüber kommt eine Höhe vom mindestens ungefähr 1 cm und vorteilhafter Weise ungefähr 2 cm für den Wasserverschluß, wodurch die Gesamthöhe mindestens ungefähr 1,5 cm und vorteilhafter Weise ungefähr 2,5 cm beträgt. Größere Höhen sind natürlich auch möglich.

Das Ventil und/oder der Ventilsitz können mit ergänzenden Abdichtmitteln, wie beispielsweise einem Abdichtring versehen sein, um die Abdichtung zwischen dem Ventil und dem Ventilsitz zu verbessern. Als Material kann ein abdichtendes Material wie beispielsweise natürliches oder synthetisches Gummi gewählt werden, welches sowohl unter trockenen als auch unter nassen Umständen eine gute Abdichtung bietet.

Ein vorhandenes Niederschlagsbecken kann sich auch in einem größeren Abstand von dem Schwimmerbecken befinden. Auch kann der Verschluß aus einer großen Anzahl loser Teile hergestellt sein.

Schließlich kann die Abführleitung auch mit anderen Heizapparaten als denen der C.V.-Kessel kombiniert werden, beispielsweise mit einem Warmwasserbereiter.

Auf diese Weise stellt die Erfindung einen zuverlässigen und kompakten Verschluß bereit, in den ein Ventil und ein Wasserverschluß eingebaut ist, wodurch der Verschluß eine kleine Höhe erhalten kann, aus wenig Teilen bestehen kann und ferner hierdurch relativ preiswert zu fertigen ist. Für einen guten und sicheren Betrieb ist der Verschluß nicht von elektronischen Mitteln abhängig und er braucht keine Gelenkteile zu umfassen. Der Verschluß ist obendrein relativ unanfällig für Verschmutzungen und behält seine Wirkung bei, selbst wenn eine Verschmutzung zwischen dem Ventil und dem Ventilsitz vorhanden ist. Der Verschluß kann bei einem sicheren Gasdruckunterschied über den Verschluß Flüssigkeit weiter abführen, bleibt aber ganz verschlossen, wenn dieser Druckunterschied groß wird. Der Verschluß ist für Gase sogar geschlossen, wenn keine Flüssigkeit in dem Verschluß vorhanden ist.

## Patentansprüche

1. Kombination aus einem Heizapparat (40) und einem Verschluß (1) für eine Kondensatabfuhr, wobei der Verschluß (1) eine Flüssigkeitskammer (20), ein Ventil (21) und einen komplementären Ventilsitz (18) umfasst, wobei
- die Flüssigkeitskammer (20) einen Boden (13) umfasst, der mit einem Ablauf (4) versehen ist,
- der Ablauf (4) den Ventilsitz (18) umfasst,
- das Ventil (21) mit einem Auftriebskörper (23) versehen ist, und
- der Ablauf (4) ferner ein Überlaufrohr (16) umfasst, das sich zumindest vom Boden (13) aus nach oben erstreckt und an seiner oben gelegenen Öffnung den Ventilsitz (18) aufweist,
wobei das Ventil (21) einen umgekehrt becherförmigen Auftriebskörper (25) umfaßt, dessen Rand (26) sich im Betrieb um das Überlaufrohr (16) herum erstreckt,
**dadurch gekennzeichnet, dass**
der Verschluß ferner ein Niederschlagsbecken (5) umfaßt, das in Gas- und Flüssigkeitsverbindung mit der Flüssigkeitskammer (20) steht.

2. Kombination aus einem Heizapparat (40) und einem Verschluß (1) für eine Kondensatabfuhr nach Anspruch 1, wobei das Überlaufrohr (16) sich über mindestens 0,5 cm nach oben erstreckt.

3. Kombination aus einem Heizapparat (40) und einem Verschluß (1) für eine Kondensatabfuhr nach Anspruch 1 oder 2, wobei der Auftriebskörper (23) sich zumindest teilweise um das Überlaufrohr (16) herum erstreckt.

4. Kombination aus einem Heizapparat (40) und einem Verschluß (1) für eine Kondensatabfuhr nach Anspruch 1, 2 oder 3, wobei sich der Auftriebskörper (23) im wesentlichen unter einem verschließenden Teil des Ventils (21) erstreckt und zumindest teilweise den Rand (23) bildet.

5. Kombination aus einem Heizapparat (40) und einem Verschluß (1) für eine Kondensatabfuhr nach einem der vorhergehenden Ansprüche, wobei der Boden (30) des Niederschlagsbeckens (5) sich im wesentlichen auf einem niedrigeren Niveau erstreckt als der Boden (13) der Flüssigkeitskammer (20).

6. Kombination aus einem Heizapparat (40) und einem Verschluß (1) für eine Kondensatabfuhr nach einem der vorhergehenden Ansprüche, wobei das Niederschlagsbecken (5) und die Flüssigkeitskammer (20) durch eine Niederschlagsschotte (19), die an ihrer Oberseite eine Durchströmöffnung zwischen dem Niederschlagsbecken (5) und der Flüssigkeitskammer begrenzt, voneinander getrennt sind.

7. Kombination aus einem Heizapparat (40) und einem Verschluß (1) für eine Kondensatabfuhr nach einem der vorhergehenden Ansprüche, wobei die Flüssigkeitskammer (20) ferner eine Decke (28) umfaßt, und daß mindestens ein Abstandhalter (29) zwischen dem Ventil (21) und der Decke (28) an mindestens einem der beiden Teile (21, 28) vorgesehen ist.

8. Kombination aus einem Heizapparat (40) und einem Verschluß (1) für eine Kondensatabfuhr nach einem der vorhergehenden Ansprüche, wobei das Ventil (21) und der Auftriebskörper (23) aus einem Stück ausgebildet sind.

9. Kombination aus einem Heizapparat (40) und einem Verschluß (1) für eine Kondensatabfuhr nach einem der vorhergehenden Ansprüche, wobei das Überlaufrohr (16) und der Boden (13) der Flüssigkeitskammer (20) aus einem Stück ausgebildet sind.

10. Kombination aus einem Heizapparat (40) und einem Verschluß (1) für eine Kondensatabfuhr nach einem der vorhergehenden Ansprüche, welche ferner ein Kondenswasserauffangbecken (41) umfaßt, das in Gas- und Flüssigkeitsverbindung mit dem Heizapparat (40) steht, wobei ein Zulauf (103) des Verschlusses (101) mit dem Kondenswasserauffangbecken (41) in Flüssigkeitsverbindung steht.

11. Kombination aus einem Heizapparat (40) und einem Verschluß (1) für eine Kondensatabfuhr nach Anspruch 10, wobei das Kondenswasserauffangbecken (41) in den Verschluß (101) eingebaut ist.

## Claims

1. Combination of a heating appliance (40) and of a closure (1) for a condensate discharge, the closure (1) comprising a liquid chamber (20), a valve (21) and a complementary valve seat (18),
- the liquid chamber (20) comprising a bottom (13) which is provided with an outflow (4),
- the outflow (4) comprising the valve seat (18),
- the valve (21) being provided with a buoyancy body (23),
and
- the outflow (4) comprising, furthermore, an overflow pipe (16) which extends upwards at least from the bottom (13) and has the valve seat (18) at its upper orifice,
the valve (21) comprising an inversely cup-shaped buoyancy body (25), the margin (26) of which extends around the overflow pipe (16) during operation,
**characterized in that**
the closure comprises, furthermore, a precipitation basin (5) which is in gas and liquid connection to the liquid chamber (20).

2. Combination of a heating appliance (40) and of a closure (1) for a condensate discharge according to Claim 1, the overflow pipe (16) extending upwards over at least 0.5 cm.

3. Combination of a heating appliance (40) and of a closure (1) for a condensate discharge according to Claim 1 or 2, the buoyancy body (23) extending at least partially around the overflow pipe (16).

4. Combination of a heating appliance (40) and of a closure (1) for a condensate discharge according to Claim 1, 2 or 3, the buoyancy body (23) extending essentially under a closing part of the valve (21) and forming at least partially the margin (23).

5. Combination of a heating appliance (40) and of a closure (1) for a condensate discharge according to one of the preceding claims, the bottom (30) of the precipitation basin (5) extending essentially at a lower level than the bottom (13) of the liquid chamber (20).

6. Combination of a heating appliance (40) and of a closure (1) for a condensate discharge according to one of the preceding claims, the precipitation basin (5) and the liquid chamber (20) being separated from one another by a precipitation partition (19) which on its top side delimits a through-flow orifice between the precipitation basin (5) and the liquid chamber.

7. Combination of a heating appliance (40) and of a closure (1) for a condensate discharge according to one of the preceding claims, the liquid chamber (20) comprising, furthermore, a ceiling (28), and in that at least one spacer (29) is provided between the valve (21) and the ceiling (28) on at least one of the two parts (21, 28).

8. Combination of a heating appliance (40) and of a closure (1) for a condensate discharge according to one of the preceding claims, the valve (21) and the buoyancy body (23) being formed from one piece.

9. Combination of a heating appliance (40) and of a closure (1) for a condensate discharge according to one of the preceding claims, the overflow pipe (16) and the bottom (13) of the liquid chamber (20) being formed from one piece.

10. Combination of a heating appliance (40) and of a closure (1) for a condensate discharge according to one of the preceding claims, which comprises, furthermore, a condensation-water collection basin (41) which is in gas and liquid connection to the heating appliance (40), an inflow (103) of the closure (101) being in liquid connection to the condensation-water collection basin (41).

11. Combination of a heating appliance (40) and of a closure (1) for a condensate discharge according to Claim 10, the condensation-water collection basin (41) being built into the closure (101).

## Revendications

1. Combinaison formée d'un appareil de chauffage (40) et d'un élément de fermeture (1) pour un système d'évacuation de condensat, ledit élément de fermeture (1) comprenant une chambre de liquide (20), une valve (21) et un siège de valve (18) complémentaire,
- la chambre de liquide (20) comprenant un fond (13) muni d'un conduit d'écoulement (4),
- le conduit d'écoulement (4) comprenant le siège de valve (18),
- la valve (21) étant munie d'un flotteur (23), et
- le conduit d'écoulement (4) comprenant, en outre, un tuyau de trop-plein (16), qui s'étend au moins à partir du fond (13) vers le haut et comporte le siège de valve (18) au niveau de son ouverture située en haut,
la valve (21) comprenant un flotteur (25) en forme de godet renversé, dont le bord (26) s'étend autour du tuyau de trop-plein (16) en cours de service,
**caractérisée en ce que** l'élément de fermeture (1) comprend, en outre, une cuve de dépôt (5) qui est en liaison du gaz et du liquide avec la chambre de liquide (20).

2. Combinaison formée d'un appareil de chauffage (40) et d'un élément de fermeture (1) pour un système d'évacuation de condensat selon la revendication 1, dans laquelle le tuyau de trop-plein (16) s'étend vers le haut sur au moins 0,5 cm.

3. Combinaison formée d'un appareil de chauffage (40) et d'un élément de fermeture (1) pour un système d'évacuation de condensat selon la revendication 1 ou 2, dans laquelle le flotteur (23) s'étend au moins en partie autour du tuyau de trop-plein (16).

4. Combinaison formée d'un appareil de chauffage (40) et d'un élément de fermeture (1) pour un système d'évacuation de condensat selon la revendication 1, 2 ou 3, dans laquelle le flotteur (23) s'étend sensiblement en dessous d'une partie d'obturation de la valve (21) et forme au moins en partie le bord (23).

5. Combinaison formée d'un appareil de chauffage (40) et d'un élément de fermeture (1) pour un système d'évacuation de condensat selon l'une quelconque des revendications précédentes, dans laquelle le fond (30) de la cuve de dépôt (5) s'étend sensiblement sur un niveau plus bas que le fond (13) de la chambre de liquide (20).

6. Combinaison formée d'un appareil de chauffage (40) et d'un élément de fermeture (1) pour un système d'évacuation de condensat selon l'une quelconque des revendications précédentes, dans laquelle la cuve de dépôt (5) et la chambre de liquide (20) sont séparées l'une de l'autre par une cloison (19) de la cuve de dépôt, qui, au niveau de son côté supérieur, délimite une ouverture de passage entre la cuve de dépôt (5) et la chambre de liquide.

7. Combinaison formée d'un appareil de chauffage (40) et d'un élément de fermeture (1) pour un système d'évacuation de condensat selon l'une quelconque des revendications précédentes, dans laquelle la chambre de liquide (20) comprend, en outre, une paroi supérieure (28), et en ce qu'au moins un écarteur (29) est prévu entre la valve (21) et la paroi supérieure (28) sur au moins un des deux éléments (21, 28).

8. Combinaison formée d'un appareil de chauffage (40) et d'un élément de fermeture (1) pour un système d'évacuation de condensat selon l'une quelconque des revendications précédentes, dans laquelle la valve (21) et le flotteur (23) sont réalisés d'un seul tenant.

9. Combinaison formée d'un appareil de chauffage (40) et d'un élément de fermeture (1) pour un système d'évacuation de condensat selon l'une quelconque des revendications précédentes, dans laquelle le tuyau de trop-plein (16) et le fond (13) de la chambre de liquide (20) sont réalisés d'un seul tenant.

10. Combinaison formée d'un appareil de chauffage (40) et d'un élément de fermeture (1) pour un système d'évacuation de condensat selon l'une quelconque des revendications précédentes, laquelle comprend, en outre, un collecteur de condensat (41) qui est en liaison du gaz et du liquide avec l'appareil de chauffage (40), un conduit d'admission (103) de l'élément de fermeture (101) étant en liaison fluidique avec le collecteur de condensat (41).

11. Combinaison formée d'un appareil de chauffage (40) et d'un élément de fermeture (1) pour un système d'évacuation de condensat selon la revendication 10, dans laquelle le collecteur de condensat (41) est intégré dans l'élément de fermeture (101).
